# FASCICULE DE BREVET EUROPEEN

(11) **EP 4 484 297 B1**
(45) Date de publication et mention de la délivrance du brevet: **06.08.2025**
(21) Numéro de dépôt: 24184037.0
(22) Date de dépôt: 24.06.2024
(51) Int. Cl.: B64D 27/12

(54) **SYSTÈME D'ATTACHE MOTEUR AVANT POUR UN MOTEUR D'AÉRONEF QUI COMPORTE UNE STRUCTURE COMPACTE**
VORDERMOTORBEFESTIGUNGSSYSTEM FÜR EINEN FLUGZEUGMOTOR MIT KOMPAKTER STRUKTUR
FRONT ENGINE ATTACHMENT SYSTEM FOR AN AIRCRAFT ENGINE HAVING A COMPACT STRUCTURE

(30) Priorité: 28.06.2023 FR 2306780
(43) Date de publication de la demande: 01.01.2025
(73) Titulaire: AIRBUS OPERATIONS (S.A.S.), 31060 Toulouse (FR)
(72) Inventeur: BERJOT, Michael, TOULOUSE (FR); LANSIAUX, Rémy, TOULOUSE (FR); VIGNES, Jean-Baptiste, TOULOUSE (FR)
(74) Mandataire: Airbus-OPS SAS

(56) Documents cités:
- EP-A1- 3 945 032
- EP-B1- 1 814 783
- WO-A1-93/11041
- FR-A1- 3 098 793
- FR-A1- 3 103 788
- GB-A- 2 119 857

## Description

### DOMAINE TECHNIQUE

La présente invention concerne un système d'attache moteur avant pour un moteur d'aéronef où le système d'attache moteur avant est compact, ainsi qu'un aéronef comportant au moins une telle attache moteur avant.

### ÉTAT DE LA TECHNIQUE ANTÉRIEURE

Un aéronef comporte classiquement au moins un moteur, en particulier un turboréacteur. Sous chaque aile et pour chaque moteur, l'aéronef comporte un mât réacteur qui est fixé à la structure de l'aile et qui s'étend en-dessous de l'aile et le moteur est suspendu sous le mât réacteur.

Le moteur est logé dans une nacelle et fixé au mât réacteur par l'intermédiaire d'un système d'attache moteur comprenant une attache moteur avant et une attache moteur arrière.

Il existe de nombreux types d'attaches moteur avant qui sont satisfaisantes du point de vue de leur utilisation actuelle. Mais les soufflantes des nouveaux moteurs sont de plus en plus grandes pour améliorer les performances des moteurs ce qui réduit d'autant la distance entre la nacelle et le sol.

Il est alors nécessaire de définir un nouvel arrangement permettant de réduire la hauteur de l'attache moteur avant pour éloigner la nacelle du sol et par voie de conséquence de rapprocher la nacelle de l'aile. Le document GB 2119 857 A décrit une structure annulaire rigide de moteur d'aéronef comprenant deux supports fournissant chacun des points d'ancrage pour l'extrémité de deux liens respectifs. L'autre extrémité des liens respectifs est reliée à la face inférieure d'une poutre support. Un cylindre fait saillie de la face inférieure de la poutre support et est reçu dans une douille complémentaire dans le carter du moteur. Le document FR 3 098 793 A1 décrit un ensemble propulseur comprenant une attache moteur avant, reliant une structure primaire et un carter de soufflante. Cette attache comportant : une platine reliée à la structure primaire, une bielle transversale reliant la platine et le carter de soufflante grâce à des première et deuxième liaisons longitudinales présentant respectivement des premier et deuxième axes de pivotement longitudinaux approximativement parallèles à une direction longitudinale, au moins l'une des première et deuxième liaisons longitudinales intégrant une rotule.

### EXPOSE DE L'INVENTION

Un objet de la présente invention est de proposer un système d'attache moteur avant qui intègre le mât réacteur et l'attache moteur avant pour réduire la hauteur de l'ensemble.

À cet effet, est proposé un système d'attache moteur avant pour un moteur d'un aéronef, le système d'attache moteur avant présentant un plan médian vertical et comportant :
- un mât réacteur comportant au niveau d'une partie avant, un nez présentant une chape femelle principale et un logement cylindrique autour d'un axe vertical,
- une bielle principale destinée à être fixée à un carter avant du moteur par une liaison rotule secondaire autour d'un axe secondaire perpendiculaire au plan médian par l'intermédiaire d'un arbre secondaire,
- un arbre principal perpendiculaire au plan médian et réalisant une liaison rotule principale de la bielle principale dans la chape femelle principale autour d'un axe principal, où l'axe principal et l'axe secondaire sont dans un même plan vertical perpendiculaire au plan médian, et
- un cylindre extérieur coaxial avec l'axe vertical, dont une première extrémité est fixée dans le logement cylindrique et dont une deuxième extrémité est destinée à être montée au travers d'une liaison linéaire annulaire autour de l'axe vertical par rapport au carter avant.

Un tel système d'attache moteur avant présente un encombrement réduit verticalement car l'attache moteur avant est intégrée au mât réacteur.

Avantageusement, l'axe principal est disposé à l'avant de l'axe vertical.

Avantageusement, la bielle principale est destinée à être fixée à une deuxième chape femelle du carter avant par une liaison pivot autour d'un axe de pivot perpendiculaire au plan médian, le système d'attache moteur avant comporte un deuxième arbre réalisant la liaison pivot, et le deuxième arbre est monté avec jeu dans un alésage de la bielle principale et destiné à être monté avec un ajustement serré dans des alésages de la deuxième chape femelle.

Selon un mode de réalisation particulier, le système d'attache moteur avant comporte un cylindre intérieur inséré et fixé dans le cylindre extérieur.

Selon un autre mode de réalisation particulier, le nez comporte deux butées latérales disposées respectivement à bâbord et à tribord du cylindre extérieur et qui sont destinées à venir entre deux contre-butées latérales du carter avant.

Avantageusement, le système d'attache moteur avant comporte deux bielles latérales disposées respectivement à bâbord et à tribord de la bielle principale, et chaque bielle latérale est montée sur l'arbre principal avec un ajustement serré et sur l'arbre secondaire avec jeu. Avantageusement, l'arbre principal est constitué d'un arbre périphérique qui est creux et d'un arbre intérieur qui est logé dans l'arbre périphérique.

L'invention propose également un aéronef comportant une structure, un moteur avec un carter avant et un système d'attache moteur avant selon l'une des variantes précédentes, où la bielle principale est fixée au carter avant par la liaison rotule secondaire et où la deuxième extrémité du cylindre extérieur est montée au travers de la liaison linéaire annulaire autour de l'axe vertical par rapport au carter avant.

### BRÈVE DESCRIPTION DES DESSINS

Les caractéristiques de l'invention mentionnées ci-dessus, ainsi que d'autres, apparaîtront plus clairement à la lecture de la description suivante d'un exemple de réalisation, ladite description étant faite en relation avec les dessins joints, parmi lesquels :
[Fig. 1] est une vue de côté d'un aéronef selon l'invention,
[Fig. 2] est une vue en perspective d'un système d'attache moteur avant selon l'invention,
[Fig. 3] est une vue en perspective d'une coupe du système d'attache moteur avant selon l'invention au niveau de la ligne III de la Fig. 2,
[Fig. 4] est une vue en perspective d'une coupe du système d'attache moteur avant selon l'invention au niveau de la ligne IV de la Fig. 2,
[Fig. 5] est une vue en perspective d'une coupe du système d'attache moteur avant selon l'invention au niveau de la ligne V de la Fig. 2, et
[Fig. 6] est une vue similaire à la Fig. 5 pour une variante de réalisation.

### EXPOSÉ DÉTAILLÉ DE MODES DE RÉALISATION

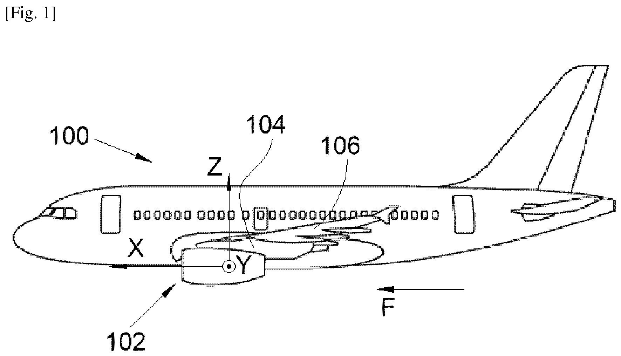

Dans la description qui suit, les termes relatifs à une position sont pris en référence à un aéronef en position d'avancement, c'est-à-dire comme il est représenté sur la Fig. 1, où la flèche F représente la direction d'avancement.

La Fig. 1 montre un aéronef 100 qui présente un moteur 102, en particulier un turboréacteur qui est fixé sous un mât réacteur 104 lui-même fixé sous une aile 106.

Dans la description qui suit, et par convention, on appelle X la direction longitudinale du moteur 102 orientée positivement dans le sens d'avancement de l'aéronef 100, on appelle Y la direction transversale du moteur 102 qui est horizontale lorsque l'aéronef 100 est au sol, et Z la direction verticale ou hauteur verticale lorsque l'aéronef 100 est au sol, ces trois directions X, Y et Z étant orthogonales entre elles.

Le moteur 102 présente globalement une forme de révolution autour de l'axe longitudinal X. Dans le mode de réalisation de l'invention présenté sur la Fig. 1, l'aéronef 100 comporte un moteur 102 sous chaque aile 106 de l'aéronef 100, mais il est possible de prévoir plusieurs moteurs sous chaque aile 106.

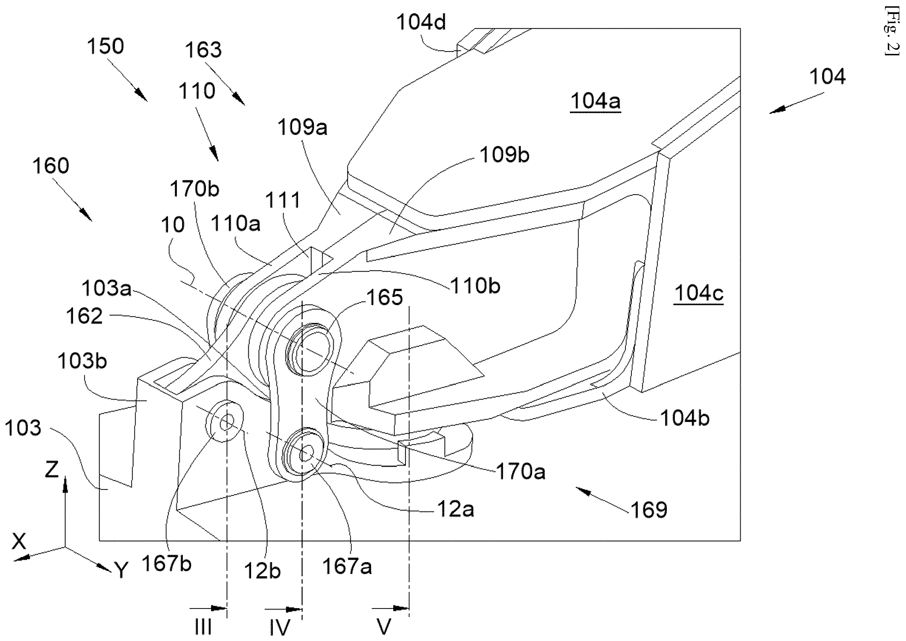

La Fig. 2 montre un système d'attache moteur avant 150 qui est fixé à la structure de l'aéronef 100, ici la structure de l'aile 106, et s'étend sous l'aile 106 et supporte le moteur 102 et en particulier la partie avant du moteur 102. Les Figs. 2 à 5 montrent différentes vues du système d'attache moteur avant 150.

Le système d'attache moteur avant 150 comprend le mât réacteur 104 fixé à la structure de l'aile 106 et une attache moteur avant 160 fixée entre le mât réacteur 104 et un carter avant 103 solidaire du moteur 102. Le système d'attache moteur avant 150 comporte un plan médian vertical XZ.

Classiquement, une attache moteur arrière est fixée entre le mât réacteur 104 et une partie arrière du moteur 102 et elle peut prendre toute forme connue de l'homme du métier.

Le mât réacteur 104 prend la forme d'un caisson qui comporte entre autres au niveau d'une partie avant 163, un nez 110 qui comporte une chape femelle principale 111 constituée de deux parois 110a-b qui sont parallèles entre elles et verticales, c'est-à-dire parallèles au plan médian XZ et donc perpendiculaires à la direction transversale Y. Comme précisé ci-dessous, la chape femelle principale 111 permet la mise en place d'une bielle qui est montée libre en rotation dans la chape femelle principale 111 autour d'un axe principal 10 orienté transversalement, c'est-à-dire perpendiculairement au plan médian XZ et donc horizontalement de manière à réaliser une liaison rotule dite principale dont un axe de rotation principale est l'axe principal 10 et où les rotations selon les deux autres axes sont d'amplitudes réduites.

Dans le mode de réalisation de l'invention présenté sur les Figs. 2 à 6, le nez 110 est constitué de deux ferrures 109a-b fixées l'une à l'autre au niveau du plan médian XZ et chaque paroi 110a-b constituant la chape femelle principale 111 appartient à l'une des ferrures 109a-b et les deux parois 110a-b sont ici symétriques par rapport au plan médian XZ.

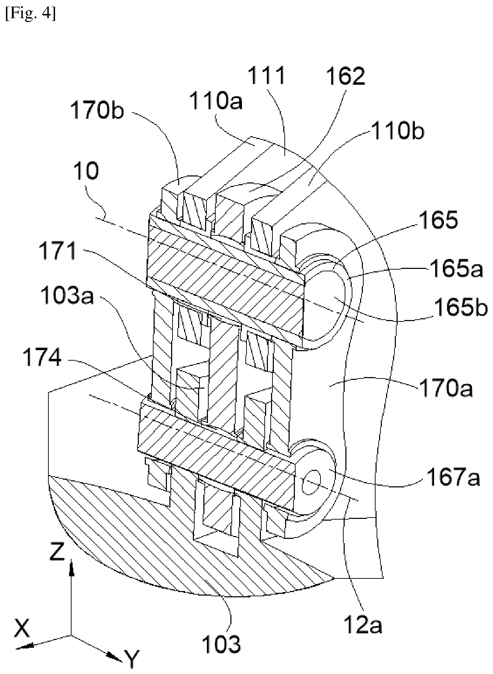

La Fig. 4 montre une coupe au niveau de la chape femelle principale 111 et d'une première chape femelle 103a.

Le mât réacteur 104 comporte une paroi supérieure 104a, une paroi inférieure 104b et deux parois latérales 104c-d. Les différentes parois 104a-d sont solidaires les unes aux autres de manière à former un caisson dont la section verticale est globalement trapézoïdale. Le nez 110 se fixe au niveau de la zone avant 163 du mât réacteur 104 par tous moyens connus comme par exemple par soudure ou des boulons. La zone avant 163 correspond aux extrémités avant des parois 104a-d.

L'attache moteur avant 160 comporte une bielle principale 162 fixée au nez 110 dans la chape femelle principale 111. La liaison rotule principale de la bielle principale 162 dans la chape femelle principale 111 est réalisée par un arbre principal 165 qui est équipé d'une noix 171 sur laquelle est montée articulée la bielle principale 162. L'arbre principal 165 qui traverse les deux parois 110a-b formant la chape femelle principale 111 et la bielle principale 162 à travers des alésages prévus à cet effet. L'arbre principal 165 est ainsi perpendiculaire au plan médian XZ. L'axe principal 10 constitue l'axe de l'arbre principal 165.

La bielle principale 162 est également fixée de manière articulée au carter avant 103 par une liaison rotule secondaire dont un axe de rotation principal est un axe secondaire 12a perpendiculaire au plan médian XZ et donc horizontal et où les rotations selon les deux autres axes sont d'amplitudes réduites. À cette fin, le carter avant 103 présente la première chape femelle 103a qui est également constituée de deux parois qui sont parallèles entre elles et verticales, c'est-à-dire parallèles au plan médian XZ et ici symétriques par rapport au plan médian XZ. La fixation de la bielle principale 162 à la première chape femelle 103a est assurée par un arbre secondaire 167a qui traverse les deux parois formant la première chape femelle 103a et la bielle principale 162 à travers des alésages prévus à cet effet. L'arbre secondaire 167a est ainsi perpendiculaire au plan médian XZ. L'axe secondaire 12a constitue l'axe de l'arbre secondaire 167a. La liaison rotule secondaire de la bielle principale 162 avec le carter avant 103 est réalisée par l'arbre secondaire 167 qui est équipé d'une noix 174 sur laquelle est montée articulée la bielle principale 162.

L'axe secondaire 12a est aligné verticalement avec l'axe principal 10 et sous ce dernier, c'est-à-dire que l'axe de l'arbre secondaire 167a et l'axe de l'arbre principal 165 sont dans un même plan vertical perpendiculaire à la direction longitudinale X et donc au plan médian XZ, ou en d'autres termes que l'axe principal de la liaison rotule principale, c'est-à-dire l'axe principal 10, et l'axe principal de la liaison rotule secondaire, c'est-à-dire l'axe secondaire 12a sont dans un même plan vertical perpendiculaire au plan médian XZ.

Dans le mode de réalisation de l'invention présenté à la Fig. 4, la bielle principale 162 est montée avec un ajustement serré via les noix 171 et 174 sur l'arbre principal 165 et sur l'arbre secondaire 167a. L'arbre principal 165 est monté à l'intérieur des alésages de la chape femelle principale 111 par l'intermédiaire de paliers rotatifs. L'arbre secondaire 167a est monté à l'intérieur des alésages de la première chape femelle 103a avec un ajustement serré.

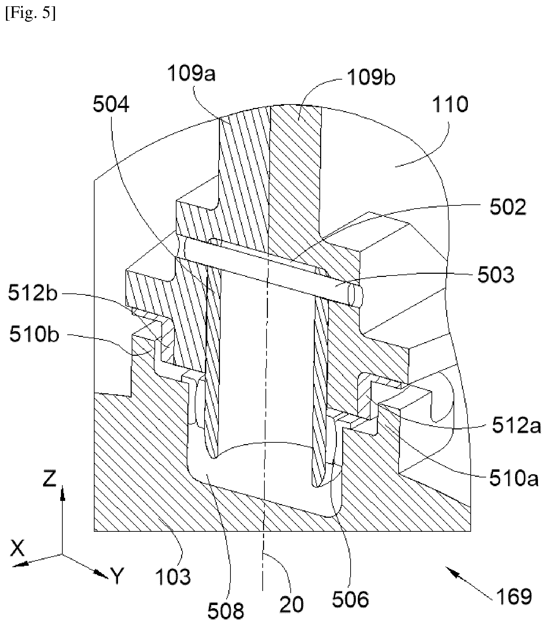

La Fig. 5 montre une coupe au niveau d'une liaison linéaire annulaire où l'axe de translation est un axe vertical 20 également appelée « liaison spigot » 169.

Le nez 110 présente un logement cylindrique 502 coaxial avec l'axe vertical 20 qui est donc orienté verticalement et ici dans le plan médian vertical XZ.

L'attache moteur avant 160 comporte également un cylindre extérieur 504 dont une première extrémité est fixée dans le logement cylindrique 502 de manière à ce que le cylindre extérieur 504 soit coaxial avec l'axe vertical 20.

Dans le mode de réalisation de l'invention présenté à la Fig. 5, la première extrémité du cylindre extérieur 504 est fixée par mise en place d'une goupille 503 qui est enchâssée dans un alésage qui traverse le cylindre extérieur 504 et le nez 110. L'axe de la goupille 503 est ici perpendiculaire à l'axe vertical 20.

La deuxième extrémité du cylindre extérieur 504 est montée au travers d'une liaison linéaire annulaire autour de l'axe vertical 20 par rapport au carter avant 103. Il y a donc une liaison rotule autour d'un axe principal qui est l'axe vertical 20 entre le cylindre extérieur 504 et le carter avant 103, et donc entre le nez 110 et le carter avant 103. Il y a également une liaison glissière dont la direction est parallèle à l'axe vertical 20.

Dans le mode de réalisation de l'invention présenté à la Fig. 5, la liaison rotule est réalisée par la mise en place d'une noix 506 montée autour du cylindre extérieur 504 sur laquelle est monté articulé le carter avant 103. La noix 506 est entre le cylindre extérieur 504 et le carter avant 103 dans lequel un perçage 508 est réalisé pour permettre la mise en place de la noix 506 et de la deuxième extrémité du cylindre extérieur 504.

La liaison glissière est réalisée entre le plot cylindrique 502 et la noix 506 qui est donc montée libre en translation le long du plot cylindrique 502 parallèlement à l'axe vertical 20. Dans le mode de réalisation de l'invention présenté à la Fig. 5, le cylindre extérieur 504 est plein.

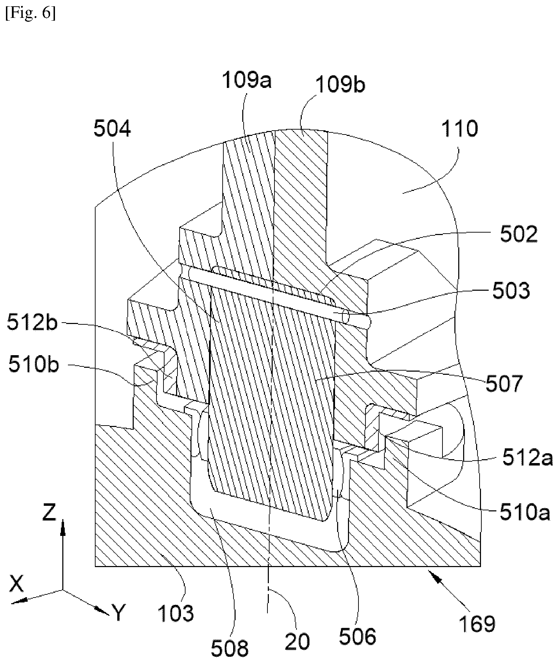

Dans le mode de réalisation de la Fig. 6, le cylindre extérieur 504 est creux et l'attache moteur avant 160 comporte également un cylindre intérieur 505 qui est inséré et fixé dans le cylindre extérieur 504. Le cylindre intérieur 505 est donc également coaxial avec l'axe vertical 20. Le diamètre extérieur du cylindre intérieur 505 est inférieur au diamètre intérieur du cylindre extérieur 504 pour créer un espace 507 entre eux, c'est-à-dire entre l'intérieur du cylindre extérieur 504 et l'extérieur du cylindre intérieur 505. La différence de diamètre est par exemple de l'ordre de 0,6 mm à 2 mm et préférentiellement de 1 mm.

Dans le mode de réalisation de l'invention présenté à la Fig. 4, la première extrémité du cylindre extérieur 504 et le cylindre intérieur 505 sont fixés par mise en place d'une goupille 503 qui est enchâssée dans un alésage qui travers le cylindre extérieur 504, le cylindre intérieur 505 et le nez 110. L'axe de la goupille 503 est ici perpendiculaire à l'axe vertical 20. La chape femelle principale 111 est disposée à l'avant de la liaison spigot 169 par rapport à la direction longitudinale X, c'est-à-dire que l'axe principal 10 de la liaison rotule principale est à l'avant de l'axe vertical 20.

Avec un tel arrangement, le mât 104 incorpore directement les éléments assurant la fixation du moteur 102 pour diminuer la hauteur nécessaire à cette fixation.

Lorsque le moteur 102 est en fonctionnement, des efforts sont générés et ils sont transmis à la structure de l'aile à travers le carter avant 103 et le système d'attache moteur avant 150, c'est-à-dire à travers la bielle principale 162, l'arbre secondaire 167a, l'arbre principal 165, la liaison spigot 169 et le mât réacteur 104 qui forment un chemin primaire d'efforts.

Les efforts en Z sont ainsi transmis à travers la liaison rotule secondaire et la liaison rotule principale, c'est-à-dire verticalement à travers la bielle principale 162.

Les efforts en X et en Y sont transmis à travers la liaison spigot 169.

Pour des raisons de sécurité, le système d'attache moteur avant 150 comporte également des moyens qui assurent des chemins secondaires d'efforts qui compensent une défaillance du chemin primaire d'efforts, ces moyens constituent des moyens de sécurité en attente (dits « waiting fail-safe » en langue anglo-saxonne).

Ainsi, selon un mode de réalisation particulier de l'invention, la bielle principale 162 est également fixée de manière articulée au carter avant 103 par une liaison pivot autour d'un axe de pivot 12b perpendiculaire au plan médian XZ et donc horizontal. À cette fin, le carter avant 103 présente une deuxième chape femelle 103b qui est constituée ici de deux parois qui sont parallèles entre elles et verticales, c'est-à-dire parallèles au plan médian XZ et qui sont ici les mêmes parois que celles de la première chape femelle 103a. La fixation de la bielle principale 162 à la deuxième chape femelle 103b est assurée par un deuxième arbre 167b qui traverse les deux parois formant la deuxième chape femelle 103b et la bielle principale 162 à travers des alésages prévus à cet effet pour réaliser la liaison pivot. Le deuxième arbre 167b est perpendiculaire au plan médian XZ. L'axe de pivot 12b constitue l'axe du deuxième arbre 167b.

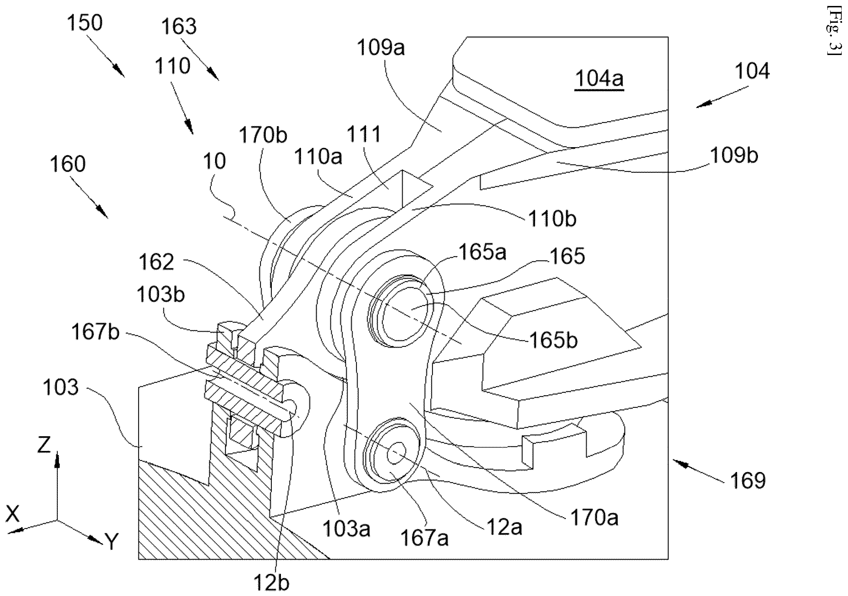

La Fig. 3 montre une coupe au niveau de la deuxième chape femelle 103b.

La bielle principale 162 est donc ici une bielle à trois points de fixation.

La chape femelle principale 111 est disposée à l'arrière de la deuxième chape femelle 103b par rapport à la direction longitudinale X, c'est-à-dire que l'axe principal 10 de la liaison rotule principale est à l'arrière de l'axe de pivot 12b de la liaison pivot.

Le deuxième arbre 167b est monté avec un ajustement serré dans les alésages de la deuxième chape femelle 103b et avec jeu dans l'alésage de la bielle principale 162. Ainsi, dans certains cas de défaillance, la bielle principale 162 et/ou deuxième arbre 167b vont se déplacer pour amener la paroi intérieure de l'alésage de la bielle principale 162 contre le deuxième arbre 167b.

Dans le mode de réalisation de l'invention présenté à la Fig. 5, en cas de défaillance au niveau de la liaison spigot 169, il est nécessaire de continuer à transmettre les efforts en Y. Ainsi, selon un mode de réalisation particulier de l'invention, le nez 110 comporte alors deux butées latérales 512a-b qui sont disposées respectivement à bâbord et à tribord du cylindre extérieur 504 et, pour chaque butée latérale 512a-b, le carter avant 103 comporte une contre-butée latérale 510a-b et les deux contre-butées latérales 510a-b sont également disposées respectivement à bâbord et à tribord du cylindre extérieur 504 et les butées latérales 512a-b sont disposées entre les contre-butées latérales 510a-b.

En position normale, c'est-à-dire sans défaillance du chemin primaire d'efforts, chaque butée latérale 512a-b est à distance de la contre-butée latérale 510a-b associée, et en cas de défaillance, l'une des butées latérales 512a-b vient en appui contre la contre-butée latérale 510a-b associée.

Dans le mode de réalisation de l'invention présenté à la Fig. 6, en cas de rupture au niveau du cylindre extérieur 504, le cylindre intérieur 505 prend le relais et forme ainsi un moyen de sécurité en attente (dit « waiting fail-safe » en langue anglo-saxonne).

En cas de défaillance, il est nécessaire de continuer à transmettre les efforts en Z. Ainsi, selon un mode de réalisation particulier de l'invention, le système d'attache moteur avant 150 comporte deux bielles latérales 170a-b disposées respectivement à bâbord et à tribord de la bielle principale 162, et dans le mode de réalisation de l'invention présenté aux Figs. 2 à 4, respectivement à bâbord et à tribord des parois 110a-b formant la chape femelle principale 111 et symétriquement par rapport au plan médian XZ.

Chaque bielle latérale 170a-b est montée sur l'arbre principal 165 avec un ajustement serré et sur l'arbre secondaire 167a avec jeu. Ainsi, dans certains cas de défaillance, au moins une bielle latérale 170a-b et/ou l'arbre secondaire 167a vont se déplacer pour amener la paroi intérieure de l'alésage de ladite au moins une bielle latérale 170a-b contre l'arbre secondaire 167a.

Dans le mode de réalisation de l'invention présenté aux Figs. 2 à 4, l'arbre principal 165 est constitué d'un arbre périphérique 165a qui est cylindrique et creux et d'un arbre intérieur 165b qui est logé dans l'arbre périphérique 165a. Un tel arrangement permet de compenser une éventuelle rupture de l'arbre périphérique 165a.

## Revendications

1. Système d'attache moteur avant (150) pour un moteur (102) d'un aéronef (100), le système d'attache moteur avant (150) présentant un plan médian vertical (XZ) et comportant :
- un mât réacteur (104) comportant au niveau d'une partie avant, un nez (110) présentant une chape femelle principale (111) et un logement cylindrique (502) autour d'un axe vertical (20),
- une bielle principale (162) destinée à être fixée à un carter avant (103) du moteur (102) par une liaison rotule secondaire autour d'un axe secondaire (12a) perpendiculaire au plan médian (XZ) par l'intermédiaire d'un arbre secondaire (167a),
- un arbre principal (165) perpendiculaire au plan médian (XZ) et réalisant une liaison rotule principale de la bielle principale (162) dans la chape femelle principale (111) autour d'un axe principal (10), où l'axe principal (10) et l'axe secondaire (12a) sont dans un même plan vertical perpendiculaire au plan médian (XZ), et
- un cylindre extérieur (504) coaxial avec l'axe vertical (20), dont une première extrémité est fixée dans le logement cylindrique (502) et dont une deuxième extrémité est destinée à être montée au travers d'une liaison linéaire annulaire autour de l'axe vertical (20) par rapport au carter avant (103).

2. Système d'attache moteur avant (150) selon la revendication 1, **caractérisé en ce que** l'axe principal (10) est disposé à l'avant de l'axe vertical (20).

3. Système d'attache moteur avant (150) selon l'une des revendications 1 ou 2, **caractérisé en ce que** la bielle principale (162) est destinée à être fixée à une deuxième chape femelle (103b) du carter avant (103) par une liaison pivot autour d'un axe de pivot (12b) perpendiculaire au plan médian (XZ), **en ce que** le système d'attache moteur avant (150) comporte un deuxième arbre (167b) réalisant la liaison pivot, et **en ce que** le deuxième arbre (167b) est monté avec jeu dans un alésage de la bielle principale (162) et destiné à être monté avec un ajustement serré dans des alésages de la deuxième chape femelle (103b).

4. Système d'attache moteur avant (150) selon l'une des revendications 1 à 3, **caractérisé en ce qu'**il comporte un cylindre intérieur (505) inséré et fixé dans le cylindre extérieur (504).

5. Système d'attache moteur avant (150) selon l'une des revendications 1 à 3, **caractérisé en ce que** le nez (110) comporte deux butées latérales (512a-b) disposées respectivement à bâbord et à tribord du cylindre extérieur (504) et qui sont destinées à venir entre deux contre-butées latérales (510a-b) du carter avant (103).

6. Système d'attache moteur avant (150) selon l'une des revendications 1 à 5, **caractérisé en ce qu'**il comporte deux bielles latérales (170a-b) disposées respectivement à bâbord et à tribord de la bielle principale (162), et **en ce que** chaque bielle latérale (170a-b) est montée sur l'arbre principal (165) avec un ajustement serré et sur l'arbre secondaire (167a) avec jeu.

7. Système d'attache moteur avant (150) selon l'une des revendications 1 à 6, **caractérisé en ce que** l'arbre principal (165) est constitué d'un arbre périphérique (165a) qui est creux et d'un arbre intérieur (165b) qui est logé dans l'arbre périphérique (165a).

8. Aéronef (100) comportant une structure, un moteur (102) avec un carter avant (103) et un système d'attache moteur avant (150) selon l'une des revendications précédentes, où la bielle principale (162) est fixée au carter avant (103) par la liaison rotule secondaire et où la deuxième extrémité du cylindre extérieur (504) est montée au travers de la liaison linéaire annulaire autour de l'axe vertical (20) par rapport au carter avant (103).

## Patentansprüche

1. Vorderes Triebwerksbefestigungssystem (150) für ein Triebwerk (102) eines Luftfahrzeugs (100), wobei das vordere Triebwerksbefestigungssystem (150) eine vertikale Mittelebene (XZ) aufweist und umfasst:
- einen Triebwerkspylon (104), der an einem vorderen Teil eine Nase (110) umfasst, die einen Hauptgabelkopf (111) und eine zylindrische Aufnahme (502) um eine vertikale Achse (20) aufweist,
- einen Hauptlenker (162), der dazu bestimmt ist, an einer vorderen Verkleidung (103) des Triebwerks (102) durch eine sekundäre Gelenkverbindung um eine sekundäre Achse (12a), die senkrecht zu der Mittelebene (XZ) verläuft, über eine sekundäre Welle (167a) fixiert zu werden,
- eine Hauptwelle (165), die senkrecht zu der Mittelebene (XZ) verläuft und eine Hauptgelenkverbindung des Hauptlenkers (162) in dem Hauptgabelkopf (111) um eine Hauptachse (10) realisiert, wobei die Hauptachse (10) und die sekundäre Achse (12a) in einer selben vertikalen Ebene liegen, die senkrecht zu der Mittelebene (XZ) verläuft, und
- einen äußeren Zylinder (504), der koaxial zu der vertikalen Achse (20) ist, von dem ein erstes Ende in der zylindrischen Aufnahme (502) fixiert ist und von dem ein zweites Ende dazu bestimmt ist, durch eine ringförmige lineare Verbindung um die vertikale Achse (20) in Bezug auf die vordere Verkleidung (103) montiert zu werden.

2. Vorderes Triebwerksbefestigungssystem (150) nach Anspruch 1, **dadurch gekennzeichnet, dass** die Hauptachse (10) vor der vertikalen Achse (20) angeordnet ist.

3. Vorderes Triebwerksbefestigungssystem (150) nach einem der Ansprüche 1 oder 2, **dadurch gekennzeichnet, dass** der Hauptlenker (162) dazu bestimmt ist, an einem zweiten Gabelkopf (103b) der vorderen Verkleidung (103) durch eine Schwenkverbindung um eine Schwenkachse (12b), die senkrecht zu der Mittelebene (XZ) verläuft, fixiert zu werden, dass das vordere Triebwerksbefestigungssystem (150) eine zweite Welle (167b) umfasst, die die Schwenkverbindung realisiert, und dass die zweite Welle (167b) mit Spiel in einer Bohrung des Hauptlenkers (162) montiert ist und dazu bestimmt ist, mit einer Presspassung in Bohrungen des zweiten Gabelkopfes (103b) montiert zu werden.

4. Vorderes Triebwerksbefestigungssystem (150) nach einem der Ansprüche 1 bis 3, **dadurch gekennzeichnet, dass** es einen inneren Zylinder (505) umfasst, der in den äußeren Zylinder (504) eingesetzt und darin fixiert ist.

5. Vorderes Triebwerksbefestigungssystem (150) nach einem der Ansprüche 1 bis 3, **dadurch gekennzeichnet, dass** die Nase (110) zwei seitliche Anschläge (512a-b) umfasst, die an Backbord bzw. an Steuerbord des äußeren Zylinders (504) angeordnet sind und die dazu bestimmt sind, zwischen zwei seitliche Gegenanschläge (510a-b) der vorderen Verkleidung (103) zu gelangen.

6. Vorderes Triebwerksbefestigungssystem (150) nach einem der Ansprüche 1 bis 5, **dadurch gekennzeichnet, dass** es zwei seitliche Lenker (170a-b) umfasst, die an Backbord bzw. an Steuerbord des Hauptlenkers (162) angeordnet sind, und dass jeder seitliche Lenker (170ab) an der Hauptwelle (165) mit einer Presspassung und an der sekundären Welle (167a) mit Spiel montiert ist.

7. Vorderes Triebwerksbefestigungssystem (150) nach einem der Ansprüche 1 bis 6, **dadurch gekennzeichnet, dass** die Hauptwelle (165) aus einer peripheren Welle (165a) besteht, die hohl ist, und aus einer Innenwelle (165b), die in der peripheren Welle (165a) aufgenommen ist.

8. Luftfahrzeug (100), umfassend eine Struktur, ein Triebwerk (102) mit einer vorderen Verkleidung (103) und ein vorderes Triebwerksbefestigungssystem (150) nach einem der vorhergehenden Ansprüche, wobei der Hauptlenker (162) an der vorderen Verkleidung (103) durch die sekundäre Gelenkverbindung fixiert ist und wobei das zweite Ende des äußeren Zylinders (504) durch die ringförmige lineare Verbindung um die vertikale Achse (20) in Bezug auf die vordere Verkleidung (103) montiert ist.

## Claims

1. Front engine attachment system (150) for an engine (102) of an aircraft (100), the front engine attachment system (150) having a vertical median plane (XZ) and having:
- an engine pylon (104) having, at a front part, a nose (110) having a main female clevis (111) and a cylindrical housing (502) around a vertical axis (20),
- a main link (162) intended to be fastened to a front casing (103) of the engine (102) by a secondary ball-joint connection about a secondary axis (12a) perpendicular to the median plane (XZ) by way of a secondary shaft (167a),
- a main shaft (165), which is perpendicular to the median plane (XZ) and establishes a main ball-joint connection of the main link (162) in the main female clevis (111) about a main axis (10), wherein the main axis (10) and the secondary axis (12a) are in the same vertical plane perpendicular to the median plane (XZ), and
- an outer cylinder (504), which is coaxial with the vertical axis (20) and a first end of which is fastened in the cylindrical housing (502) and a second end of which is intended to be mounted, via an annular linear connection, around the vertical axis (20) with respect to the front casing (103).

2. Front engine attachment system (150) according to Claim 1, **characterized in that** the main axis (10) is arranged in front of the vertical axis (20).

3. Front engine attachment system (150) according to either of Claims 1 and 2, **characterized in that** the main link (162) is intended to be fastened to a second female clevis (103b) of the front casing (103) by a pivot connection about a pivot axis (12b) perpendicular to the median plane (XZ), **in that** the front engine attachment system (150) has a second shaft (167b) establishing the pivot connection, and **in that** the second shaft (167b) is mounted with clearance in a bore in the main link (162) and intended to be mounted with a tight fit in the bores in the second female clevis (103b).

4. Front engine attachment system (150) according to one of Claims 1 to 3, **characterized in that** it has an inner cylinder (505) that is inserted into and fastened in the outer cylinder (504).

5. Front engine attachment system (150) according to one of Claims 1 to 3, **characterized in that** the nose (110) has two lateral stops (512a-b), which are arranged respectively on the port side and on the starboard side of the outer cylinder (504) and are intended to come between two lateral counter-stops (510a-b) of the front casing (103).

6. Front engine attachment system (150) according to one of Claims 1 to 5, **characterized in that** it has two lateral links (170a-b) arranged respectively on the port side and on the starboard side of the main link (162), and **in that** each lateral link (170a-b) is mounted on the main shaft (165) with a tight fit and on the secondary shaft (167a) with clearance.

7. Front engine attachment system (150) according to one of Claims 1 to 6, **characterized in that** the main shaft (165) consists of a peripheral shaft (165a), which is hollow, and of an inner shaft (165b), which is housed in the peripheral shaft (165a).

8. Aircraft (100) having a structure, an engine (102) with a front casing (103) and a front engine attachment system (150) according to one of the preceding claims, wherein the main link (162) is fastened to the front casing (103) by the secondary ball-joint connection and wherein the second end of the outer cylinder (504) is mounted, via the annular linear connection, around the vertical axis (20) with respect to the front casing (103).
